# EUROPÄISCHE PATENTSCHRIFT

(11) **EP 3 714 174 B1**
(45) Veröffentlichungstag und Bekanntmachung des Hinweises auf die Patenterteilung: **07.06.2023**
(21) Anmeldenummer: 18807303.5
(22) Anmeldetag: 20.11.2018
(51) Int. Cl.: F16B 25/00, F16B 37/12, B25B 27/14

(54) **DRAHTGEWINDEEINSATZ**
WIRE THREAD INSERT
INSERT FILETÉ EN FIL MÉTALLIQUE

(30) Priorität: 23.11.2017 DE 102017127750
(43) Veröffentlichungstag der Anmeldung: 30.09.2020
(73) Patentinhaber: Böllhoff Verbindungstechnik GmbH, 33649 Bielefeld (DE)
(72) Erfinder: STUMPF, Michael, 33611 Bielefeld (DE); PURRIO, Marcel, 33619 Bielefeld (DE); WENNIGES, Theodor, 33154 Salzkotten-Verne (DE); GRUBERT, Klaus-Friedrich, 31675 Bückeburg (DE); BUTOV, Alexej, 33332 Gütersloh (DE); SCHREINER, Anna-Katharina, 33102 Paderborn (DE)
(74) Vertreter: HWP Intellectual Property
(86) Internationale Anmeldenummer: PCT/EP2018/081989
(87) Internationale Veröffentlichungsnummer: WO 2019/101760

(56) Entgegenhaltungen:
- EP-A1- 2 405 150
- DE-A1- 2 350 905
- DE-T2- 69 903 394
- GB-A- 408 608
- JP-A- 2008 298 218
- US-A- 534 164
- US-A- 964 062
- US-A- 2 751 238
- US-A- 3 062 568
- US-A- 3 945 070

## Beschreibung

### 1. Gebiet der Erfindung

Vorliegende Erfindung betrifft einen Drahtgewindeeinsatz, der mit Hilfe einer formschlüssigen Verbindung auf einem Bolzengewinde oder einem Mutterngewinde befestigbar ist. Des Weiteren betrifft vorliegende Erfindung einen Gewindebolzen sowie eine Gewindeöffnung mit einem derartigen Drahtgewindeeinsatz. Zudem ist vorliegende Erfindung auf Verfahren zur Installation und Deinstallation derartiger Drahtgewindeeinsätze auf Bolzengewinden und in Mutterngewinden gerichtet.

### 2. Hintergrund der Erfindung

Herkömmliche Gewindeeinsätze in Form eines wendelförmig gewickelten Drahtes oder einer Gewindebuchse dienen dem Verstärken des Aufnahmegewindes von Bauteilen aus Materialien relativ geringer Festigkeit. Zu diesem Zweck wird das gewindepanzernde Element im Aufnahmegewinde montiert, worauf dann die Schraube in das gewindepanzernde Element eingedreht werden kann. Die Gesamtmontage erfordert somit zwei Arbeitsgänge, zum einen das Einbringen des gewindepanzernden Elementes in das Aufnahmegewinde und zum anderen das Einbringen der Schraube in das montierte gewindepanzernde Element, was die Montage entsprechend aufwendig macht.

Zum Einbringen des gewindepanzernden Elementes in das Aufnahmegewinde sind zwei Montagearten üblich. Bei der einen Montageart ist der wendelförmige Draht mit einer Mitnahme-Kerbe versehen, über die ein Spezialwerkzeug den wendelförmigen Draht mitschleppt und in das Aufnahmegewinde eindreht, vgl. zum Beispiel US 4,563,119, US 4,645,398, US 4,553,303, etc. Bei der anderen Montageart ist der wendelförmige Draht an einem Ende mit einem diagonal verlaufenden Mitnahme-Zapfen versehen, über den wiederum ein Spezialwerkzeug den wendelförmigen Draht mitschleppt und hierdurch in das Aufnahmegewinde eindreht, vgl. zum Beispiel US 2,152,681, US 2,363,663, etc. Die Mitnahme-Kerbe resultiert in einer Querschnittsänderung des Drahtes, was den Wickelprozess schwieriger macht. Der Mitnahme-Zapfen hat den Nachteil, dass er nach der Montage gebrochen und entfernt werden muss. In jedem Fall ist ein aufwendiges und kostspieliges Spezialwerkzeug zum Einbringen des wendelförmigen Drahtes in das Aufnahmegewinde erforderlich.

Aus US-A-2 150 876 und US-A-2 745 457 ist ein gewindepanzerndes Element in Form eines wendelförmigen Drahtes bekannt, der an einem Ende mit einem diametral verlaufenden Mitnahme-Zapfen versehen ist. Die zugehörige Schraube ist an ihrem vom Schraubenkopf abgewandten Ende mit einer diametral verlaufenden Nut versehen, in die der Mitnahme-Zapfen des wendelförmigen Drahtes einschnappt, wenn der Draht auf der Schraube montiert wird. Die Schraube und der darauf montierte Draht können daher gemeinsam in das Aufnahmegewinde des Bauteils eingebracht werden. Hierdurch wird zwar der Montagevorgang vereinfacht; die Herstellung der Nut in der Schraube und des Zapfens am wendelförmigen Draht erfordern jedoch einen entsprechenden Aufwand.

Die oben genannten Drahtgewindeeinsätze sind ebenfalls in EP 1 898 107 A1 beschrieben. Darüber hinaus ist in EP 1 898 107 A1 ein Drahtgewindeeinsatz offenbart, der mithilfe einer kraftschlüssigen und/oder einer stoffschlüssigen Verbindung auf einem Bolzengewinde befestigt wird. Somit dient auch dieser Drahtgewindeeinsatz als ein gewindepanzerndes Element beispielsweise auf einem Gewindebolzen oder einer Schraube. Der Kraftschluss zwischen dem Bolzengewinde und in Drahtgewindeeinsatz wird durch eine in ihrem Durchmesser verjüngte Windung erzielt. Diese in ihrem Durchmesser verjüngte Windung ist in einem axialen Endbereich des Drahtgewindeeinsatzes angeordnet. Der Kraftschluss entsteht durch ein bis zwei Windungen in einem axialen Endabschnitt des Drahtgewindeeinsatzes, deren Innendurchmesser kleiner als der Gewindedurchmesser des Bolzens bzw. der Schraube ist. Um einen Stoffschluss zwischen dem Drahtgewindeeinsatz und dem aufnehmenden Gewinde zu erzielen, wird beispielsweise ein adhäsives Bindemittel wie Wachs oder Klebstoff zwischen dem Drahtgewindeeinsatz und dem Gewinde aufgebracht.

Während die oben beschriebenen Drahtgewindeeinsätze aus einem Körper mit einer Mehrzahl von schraubenförmig gewickelten Windungen bestehen, der eine zylindrische Form aufweist, ist aus US 3 062 568 A ein Drahtgewindeeinsatz mit einem konisch geformten Körper bekannt. Derartige konisch oder keglig gewickelte Drahtgewindeeinsätze werden beispielsweise auf einem konischen Bolzengewinde angeordnet. Konisch geformte Gewindepartner nutzt man zur Herstellung einer flüssigkeitsdichten Verbindung zwischen zwei Rohrstücken. Um den konisch geformten Gewindeeinsatz auf dem Bolzengewinde sicher anzuordnen, werden beide Enden des Drahtgewindeeinsatzes mit dem Bolzenkörper verbunden. Für diese Verbindungen, die die Position des Drahtgewindeeinsatzes auf dem konischen Bolzengewinde sichern, sind verschiedene Alternativen bekannt. Eine Möglichkeit besteht darin, die beiden Enden des Drahtgewindeeinsatzes mit dem Bolzenkörper zu verschweißen. Gemäß einer weiteren Alternative werden die beiden Enden abgeflacht, um sie dann mithilfe eines Stifts oder eines Niets mit dem Bolzenkörper fest zu verbinden. Eine dritte Möglichkeit sieht vor, eine Art Stecker oder Stift mit den Enden des konischen Drahtgewindeeinsatzes schweißend zu verbinden, sodass diese dann in eine entsprechende Öffnung im konischen Bolzenkörper eingesetzt werden können. Entsprechend der oben zusammengefassten Verbindungsmaßnahmen zwischen konischem Drahtgewindeeinsatz und konischem Bolzengewinde wird klar, dass diese Art der Gewindepanzerung zeit- und arbeitsaufwendig ist.

Ausgehend von dem oben genannten Stand der Technik ist es die Aufgabe vorliegender Erfindung, eine alternative Konstruktion eines gewindeverstärkenden Drahtgewindeeinsatzes bereitzustellen, der selbstsichernd auf einem Gewindebereich befestigbar ist, ohne dass diese Art der Befestigung zusätzliche Arbeitsschritte mit sich bringt.

### 3. Zusammenfassung der Erfindung

Die obige Aufgabe wird durch einen Drahtgewindeeinsatz gemäß dem unabhängigen Patentanspruch 1, durch einen Gewindebolzen in Kombination mit einem Drahtgewindeeinsatz gemäß Patentanspruch 4, durch eine Gewindeöffnung eines Mutterngewindes in Kombination mit einem Drahtgewindeeinsatz gemäß Patentanspruch 5 sowie durch eine Verbindung aus einem Gewindebolzen und einer Gewindeöffnung mit mindestens einem Drahtgewindeeinsatz gemäß Patentanspruch 6 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Der erfindungsgemäße Drahtgewindeeinsatz besteht aus einem Körper mit einer Mehrzahl von schraubenförmig gewickelten Windungen. Die Mehrzahl an schraubenförmig gewickelten Windungen umfasst eine erste Endwindung und eine zweite Endwindung, die den Körper an einander gegenüberliegenden axialen Enden begrenzen. Die erste Endwindung weist in einem ersten Endabschnitt ein erstes integrales Formschlussmittel auf und die zweite Endwindung weist in einem zweiten Endabschnitt ein zweites integrales Formschlussmittel auf, sodass in einem installierten Zustand des Drahtgewindeeinsatzes über das erste und das zweite integrale Formschlussmittel jeweils eine formschlüssige drehungshemmende Verbindung mit einer angrenzenden Bauteilstruktur herstellbar ist.

Vorliegende Erfindung betrifft einen Drahtgewindeeinsatz, der in seiner grundlegenden Struktur bekannt ist. Er besteht aus einer Mehrzahl von schraubenförmig gewickelten Windungen, die in ihrer Größe an ein zu verstärkendes Gewinde angepasst sind. Derartige Drahtgewindeeinsätze werden für Bolzengewinde in gleicher Weise wie für Mutterngewinde bereitgestellt. Vorzugsweise ist ein Drahtgewindeeinsatz für ein Bolzengewinde in Bezug auf den Außendurchmesser des Bolzengewindes untermaßig konfiguriert. Das bedeutet, dass der Drahtgewindeeinsatz das Bolzengewinde aufgrund seiner inhärenten Federkraft umschließt. In Analogie dazu weist ein für ein Mutterngewinde vorgesehener Drahtgewindeeinsatz eine übermaßige Konfiguration auf. Entsprechend drückt sich der Drahtgewindeeinsatz im installierten Zustand in das Innengewinde der Gewindeöffnung. Da eine kraftschlüssige Verbindung zwischen dem Drahtgewindeeinsatz und dem entsprechenden Gewinde aufgrund des oben beschriebenen Untermaßes oder Überma-βes des Drahtgewindeeinsatzes lediglich ein optionales Merkmal darstellt oder zu nur geringen Haltekräften führt, ist für beide axiale Enden des Drahtgewindeeinsatzes jeweils ein integrales Formschlussmittel vorgesehen. Dieses Formschlussmittel greift jeweils in die benachbarte Bauteilwand des Gewindebolzens oder des Mutterngewindes ein. Entsprechend ist es ebenfalls bevorzugt, dass das integrale Formschlussmittel in das Mutterngewinde oder das Bolzengewinde eingreift. Die beiden integralen Formschlussmittel sind derart angeordnet, dass sie aufgrund ihrer Formgebung und/oder Orientierung in Bezug auf die Längsachse des Drahtgewindeeinsatzes einen drehungshemmenden Hinterschnitt für den Drahtgewindeeinsatz bilden. Dieser drehungshemmende Hinterschnitt trägt somit zum stabilen Halt und positionierten Befestigen des Drahtgewindeeinsatzes innerhalb des aufnehmenden Gewindes, also des Bolzengewindes oder des Mutterngewindes bei. Da die beiden endseitig vorgesehenen integralen Formschlussmittel einen permanenten Bestandteil des Drahtgewindeeinsatzes darstellen, erzeugen sie aufgrund ihrer Anordnung auch selbsttätig jeweils eine formschlüssige Verbindung mit der angrenzenden Bauteilwand am Ende eines Installationsvorgangs des Drahtgewindeeinsatzes. Entsprechend führen also die integralen Formschlussmittel des Drahtgewindeeinsatzes zu einer selbsttätigen Verbindung mit dem Bolzengewinde oder dem Mutterngewinde, sodass der Drahtgewindeeinsatz gegen ein Verdrehen innerhalb des aufnehmenden Gewindes geschützt ist. Dies hat zur Folge, dass keine zusätzlichen Bolzen, Niete, Schweißstellen für die Befestigung des Drahtgewindeeinsatzes auf dem Gewindebolzen oder in einer Gewindeöffnung erforderlich sind.

Gemäß der vorliegenden Erfindung sind das erste und das zweite Formschlussmittel gleichartig orientiert, insbesondere radial einwärts oder radial auswärts bezogen auf die schraubenförmig gewickelten Windungen.

Die beiden Formschlussmittel im axialen Endbereich des Drahtgewindeeinsatzes nutzen die jeweils angrenzende Bauteilwand des Gewindebolzens oder des Mutterngewindes. Ist der Drahtgewindeeinsatz an ein Bolzengewinde angepasst, dann sind die beiden integralen Formschlussmittel radial einwärts bezogen auf die Windungen des Drahtgewindeeinsatzes orientiert. Entsprechend greifen sie im installierten Zustand in entsprechende Vertiefungen des Gewindebolzens ein, um sich dort formschlüssig zu verriegeln. In Analogie dazu sind die integralen Formschlussmittel eines Drahtgewindeeinsatzes für ein Mutterngewinde radial auswärts in Richtung der angrenzenden Wand des Mutterngewindes orientiert. Im installierten Zustand greifen die integralen Formschlussmittel dort in jeweils vorgesehene Vertiefungen oder Strukturen ein, um die drehungshemmende formschlüssige Verbindung zwischen Drahtgewindeeinsatz und Mutterngewinde bzw. der Bauteilwand der Gewindeöffnung herzustellen.

Gemäß einer weiteren bevorzugten Ausführungsform vorliegender Erfindung stellen das erste und das zweite Formschlussmittel entsprechend einen ersten und einen zweiten rotationshemmenden Hinterschnitt bereit, die entgegengesetzt zueinander orientiert sind.

Allgemein sind Gewindeverbindungen im Bereich der ineinandergreifenden Gewindegänge Reibungskräften ausgesetzt. Bei der Verwendung eines Drahtgewindeeinsatzes führen diese Reibungskräfte dazu, dass der installierte Drahtgewindeeinsatz einem Drehmoment ausgesetzt ist. In Abhängigkeit von der Drehrichtung der miteinander zu verbindenden Gewindeelemente relativ zueinander wird der Drahtgewindeeinsatz mit einander entgegengesetzten Drehmomenten belastet. Um unabhängig von der Wirkrichtung des Drehmoments zu gewährleisten, dass sich der installierte Drahtgewindeeinsatz nicht aus seiner Position lösen lässt, bilden die beiden integralen Formschlussmittel einander entgegengesetzt wirkende drehungshemmende Hinterschnitte. Der jeweilige drehungshemmende Hinterschnitt sorgt dafür, dass bei einem reibungsintensiven Drehen der Gewindeverbindung der installierte Drahtgewindeeinsatz nicht durch ein möglicherweise aufweitendes Drehmoment von seinem Gewinde gelöst wird. Dies gilt vorzugsweise für beide Drehrichtungen, weshalb die integralen rotationshemmenden Formschlussmittel gegenläufig konfiguriert sind.

Gemäß der vorliegenden Erfindung umfasst das erste Formschlussmittel einen Rasthaken angrenzend an eine Vertiefung im ersten Endabschnitt und das zweite Formschlussmittel im zweiten Endabschnitt einen Endzapfen.

Der bevorzugte Endzapfen wird vorzugsweise durch einen radial einwärts gebogenen Endabschnitt des Drahtendes gebildet. Dieses Drahtende ragt entsprechend radial einwärts in das Innere der schraubenförmig gewickelten Windungen. Da dieser Endzapfen eine Rotationshemmung realisieren soll, weist er vorzugsweise eine radiale Erstreckung von weniger als 30 % des Radius des Drahtgewindeeinsatzes auf. Zudem ist es bevorzugt, dass der Endzapfen zumindest radial einwärts orientiert ist, nicht aber genau auf einen Mittelpunkt der schraubenförmig gewickelten Windungen des Drahtgewindeeinsatzes ausgerichtet sein muss. Maßgeblich für die Funktionsweise des Endzapfens ist, dass er einen drehungshemmenden Hinterschnitt bildet.

Der bevorzugte Rasthaken des ersten Formschlussmittels ist vorzugsweise im Draht des Drahtgewindeeinsatzes ausgeformt. Zu diesem Zweck ist eine Vertiefung vorgesehen, sodass ein an die Vertiefung angrenzender bzw. ein diese Vertiefung begrenzender Vorsprung eine Rastfläche oder Verriegelungsfläche bildet. Sobald diese Rastfläche in eine entsprechende Vertiefung oder gegen einen Vorsprung am Gewindebolzen oder in der Gewindeöffnung angreift, wird auf diese Weise ein drehungshemmender Hinterschnitt gebildet.

Gemäß einer nicht erfindungsgemäßen Ausführungsform ist der Körper des Drahtgewindeeinsatzes zylindrisch geformt. Weiterhin anknüpfend an die obigen Erläuterungen sind das erste und das zweite Formschlussmittel radial einwärts orientiert, sodass der Drahtgewindeeinsatz eine Gewindeverstärkung für ein Bolzengewinde bereitstellt.

Gemäß einer nicht erfindungsgemäßen Ausführungsform weisen die Windungen an einer radialen Außenseite des zylindrischen Körpers ein Gewindeprofil und an der Innenseite ein Verankerungsprofil auf. Zudem sind vorzugsweise die Windungen des zylindrischen Drahtgewindeeinsatzes bezogen auf ihren Durchmesser untermaßig im Vergleich zu einem Durchmesser des Bolzengewindes ausgelegt. Diese bevorzugte untermaßige Konfiguration des Durchmessers des Drahtgewindeeinsatzes stellt sicher, dass sich der zylindrisch geformte Drahtgewindeeinsatz bereits durch Reibschluss aufgrund seiner inhärenten Federkräfte in seinem installierten Zustand auf dem Bolzengewinde festhält.

Gemäß einer nicht erfindungsgemäßen Ausführungsform des zylindrischen Drahtgewindeeinsatzes sind das erste und das zweite Formschlussmittel radial auswärts orientiert, sodass der Drahtgewindeeinsatz eine Gewindeverstärkung für ein Mutterngewinde einer Gewindeöffnung bereitstellt. In diesem Zusammenhang ist es ebenfalls bevorzugt, dass die Windungen eines zylindrischen Drahtgewindeeinsatzes für ein Mutterngewinde an einer radialen Außenseite ein Verankerungsprofil und an einer radialen Innenseite ein Gewindeprofil bereitstellen. Dies gewährleistet, dass sich der Drahtgewindeeinsatz verlässlich in dem Mutterngewinde verankern und somit befestigen und positionieren kann. Zudem weisen die Windungen bevorzugt bezogen auf ihren Durchmesser eine übermäßige Konfiguration im Vergleich zu einem Durchmesser des Mutterngewindes auf. Diese ebenfalls bevorzugte Konfiguration gewährleistet, dass sich aufgrund der inhärenten Federkräfte des Drahtgewindeeinsatzes dieser im Mutterngewinde reibschlüssig befestigt.

Erfindungsgemäß ist der Körper des Drahtgewindeeinsatzes konisch geformt. In dieser Konfiguration bilden die schraubenförmig gewickelten Windungen eine konische oder keglige Außenkontur des Drahtgewindeeinsatzes. Diese Form ermöglicht es, den Drahtgewindeeinsatz auf einem konischen Bolzengewinde oder innerhalb einer konisch geformten Gewindeöffnung anzuordnen und dort positionsstabil selbsttätig zu befestigen. In diesem Zusammenhang ist es bevorzugt, dass das erste und das zweite Formschlussmittel radial einwärts orientiert sind, sodass der Drahtgewindeeinsatz eine Gewindeverstärkung für ein konisches Bolzengewinde bereitstellt. Entsprechend ist es ebenfalls bevorzugt, dass das erste und das zweite Formschlussmittel radial auswärts orientiert sind, sodass der Drahtgewindeeinsatz eine bevorzugte Gewindeverstärkung für ein konisches Mutterngewinde bereitstellt.

Um einen verlässlichen Halt des konisch geformten Drahtgewindeeinsatzes auf einem konischen Bolzengewinde sicherzustellen, weist die erste Endwindung einen größeren Durchmesser als die zweite Endwindung auf und der Rasthaken ist im ersten Endabschnitt und der Endzapfen ist im zweiten Endabschnitt angeordnet.

Aufgrund der oben zusammengefassten bevorzugten Konfiguration eines konisch geformten Drahtgewindeeinsatzes für ein konisches Bolzengewinde befindet sich der rotationshemmende Rasthaken bevorzugt in der bezogen auf ihren Radius größten Windung des Drahtgewindeeinsatzes. Entsprechend ist der Endzapfen in der Windung mit dem kleinsten Durchmesser des Drahtgewindeeinsatzes angeordnet. Dies führt zu der bevorzugten Konfiguration, dass der Rasthaken in einem eher schwer zugänglichen Gewindebereich angeordnet ist. Im Gegensatz dazu befindet sich bevorzugt im installierten Zustand der Endzapfen in einem Anfangsbereich des konisch geformten Bolzengewindes. Aufgrund dieser bevorzugten Anordnung ist der Endzapfen zugänglich, um zur Unterstützung von Installation und Deinstallation des konisch geformten Drahtgewindeeinsatzes gezielt ein Drehmoment sowie eine Lösekraft auf den Endzapfen aufzubringen. Wird beispielsweise während der Installation des Drahtgewindeeinsatzes ein Drehmoment in Gangrichtung des Bolzengewindes aufgebracht, führt dies zu einer Aufweitung des Drahtgewindeeinsatzes. Eine gezielte Aufweitung des Drahtgewindeeinsatzes unterstützt eine Installation auf dem konisch geformten Bolzengewinde, bis der Rasthaken und der Endzapfen formschlüssig verriegelt sind. Für eine bevorzugte Deinstallation des konisch geformten Drahtgewindeeinsatzes ist es von Vorteil, mithilfe eines Lösemoments und eines gezielt aufgebrachten Drehmoments auf den Endzapfen den konisch geformten Drahtgewindeeinsatz aufzuweiten. Auf diese Weise wird die Deinstallation, also das Entfernen des konisch geformten Drahtgewindeeinsatzes von dem konisch geformten Bolzengewinde erleichtert, um diesen beispielsweise im Falle einer zu großen Abnutzung gegen einen neuen Drahtgewindeeinsatz auszutauschen.

Vorliegende Offenbarung umfasst zudem einen Gewindebolzen mit einem zylindrischen Außengewinde, auf dem ein Drahtgewindeeinsatz gemäß einer der oben beschriebenen zylindrischen nicht erfindungsgemäßen Ausführungsformen des Drahtgewindeeinsatzes angeordnet ist. Zudem umfasst vorliegende Erfindung einen Gewindebolzen mit einem konischen Außengewinde, auf dem ein konisch geformter Drahtgewindeeinsatz gemäß eine der oben beschriebenen Ausführungsformen angeordnet ist. Des Weiteren umfasst vorliegende Offenbarung eine Gewindeöffnung mit einem zylindrischen Innengewinde, in dem ein zylindrisch geformter Drahtgewindeeinsatz gemäß einer der oben beschriebenen nicht erfindungsgemäßen Ausführungsformen angeordnet ist. Des Weiteren umfasst vorliegende Erfindung eine Gewindeöffnung mit einem konisch geformten Innengewinde, in dem ein konisch geformter Drahtgewindeeinsatz gemäß einer der oben beschriebenen Ausführungsformen installiert bzw. angeordnet ist.

Gemäß einer weiteren bevorzugten Ausführungsform vorliegender Erfindung ist eine Verbindung aus einem Bolzen mit einem äußeren Bolzengewinde und einer Gewindeöffnung mit einem inneren Mutterngewinde von vorliegende Erfindung umfasst. Diese Verbindung zeichnet sich dadurch aus, dass das Bolzengewinde mit einem Drahtgewindeeinsatz gemäß einer der oben beschriebenen Ausführungsformen oder/und das Mutterngewinde mit einem Drahtgewindeeinsatz gemäß einer der oben beschriebenen Ausführungsformen ausgestattet sind.

Vorliegende Erfindung umfasst zudem ein Installationsverfahren für den erfindungsgemäßen Drahtgewindeeinsatz auf einem Bolzengewinde gemäß Patentanspruch 7. Das Installationsverfahren weist die folgenden Schritte auf: Aufnehmen des Drahtgewindeeinsatzes in einem Installationswerkzeug mit einem weiblichen Installationsgewinde, das einen Gewindegang umfasst, Blockieren des Gewindegangs mit einem radial versetzbaren Anschlagmittel, Drehen des Installationswerkzeugs in einer Gangrichtung des Drahtgewindeeinsatzes derart, dass das Anschlagmittel endseitig entgegen einer Installationsrichtung am Drahtgewindeeinsatz angreift, wobei das Installationswerkzeug so lange gedreht wird, bis die beiden integralen Formschlussmittel am Bolzen verriegelt sind, und Zurückdrehen des Installationswerkzeugs, um es vom Drahtgewindeeinsatz zu entfernen.

Das erfindungsgemäß bevorzugte Installationsverfahren schraubt oder schiebt den Drahtgewindeeinsatz, der konisch geformt ist, auf das Bolzengewinde des Gewindebolzens. Dabei wird ein bevorzugtes unten näher beschriebenes Installationswerkzeug eingesetzt. Der Drahtgewindeeinsatz wird so lange auf das Bolzengewinde geschoben bzw. geschraubt, bis sich die beiden endseitig angeordneten Formschlussmittel am Gewindebolzen befestigt haben. Bei diesem Vorgang dient das der Installationsrichtung abgewandte endseitige Formschlussmittel, hier vorzugsweise der Endzapfen, dazu, den Drahtgewindeeinsatz innerhalb des Gewindegangs des Bolzengewindes in Einschraubrichtung zu drücken. Da der Endzapfen radial einwärts gebogen ist, wie es oben erläutert worden ist, bildet er eine ausreichend große Anschlagfläche, um den Drahtgewindeeinsatz vorwärts zu bewegen. Vorwärts bedeutet in diesem Zusammenhang entgegen der Einschraubrichtung des Bolzengewindes. Während dieses Aufschraubens oder Aufschiebens des Drahtgewindeeinsatzes auf das Bolzengewinde ist der Drahtgewindeeinsatz Reibungskräften mit dem Bolzengewinde ausgesetzt. Diese Reibungskräfte wirken dem Aufschrauben bzw. Aufschieben entgegen, was zu einem zumindest teilweisen Aufweiten des Drahtgewindeeinsatzes während der Installation führt. Dieses Aufweiten erleichtert aber auch das Aufschrauben bzw. Aufschieben des Drahtgewindeeinsatzes auf das Bolzengewinde. Sobald das integral ausgebildete Formschlussmittel am vorauseilenden Ende des Drahtgewindeeinsatzes die am Gewindebolzen vorgesehene Vertiefung erreicht hat, schnappt es an dieser Stelle ein. Gleichzeitig läuft der Endzapfen in eine entsprechende Vertiefung am Gewindebolzen ein. Auf diese Weise ist der Drahtgewindeeinsatz an seinen beiden Enden bzw. im Bereich der beiden Enden formschlüssig mit dem Gewindebolzen verbunden.

Gemäß einer bevorzugten Ausgestaltung umfasst das Installationsverfahren den weiteren Schritt: endseitiges Schieben des Drahtgewindeeinsatzes mit dem Anschlagmittel, sodass der Drahtgewindeeinsatz radial aufgeweitet wird, wie es oben bereits beschrieben worden ist.

Weiterhin bevorzugt umfasst das Installationsverfahren den weiteren Schritt: Verrasten des zweiten Formschlussmittels in einer Vertiefung des Gewindebolzens und Verrasten des ersten Formschlussmittels in einer Aufnahmenut, die vorzugsweise eine Einlaufschräge aufweist.

Das vorauseilende Ende des Drahtgewindeeinsatzes umfasst vorzugsweise einen radial einwärts ragenden Rasthaken. Dieses zweite Formschlussmittel greift in eine Vertiefung des Gewindebolzens ein. Der am gegenüberliegenden Ende des Drahtgewindeeinsatzes vorgesehene radial einwärts ragende Endzapfen läuft als erstes Formschlussmittel in eine Aufnahmenut am Gewindebolzen ein. Diese Aufnahmenut weist bevorzugt eine Einlaufschräge auf. Diese Einlaufschräge erleichtert nicht nur das Verrasten des Endzapfens am Gewindebolzen, sondern unterstützt auch eine Deinstallation des Drahtgewindeeinsatzes vom Gewindebolzen. Denn sobald der Drahtgewindeeinsatz vom Bolzengewinde abgeschraubt werden soll, wird der Endzapfen bevorzugt über die Einlaufschräge aus der Aufnahmenut herausgedrückt. Auf diese Weise löst sich dann die formschlüssige Verbindung am ersten Formschlussmittel.

Zur bevorzugten Unterstützung des Installationsverfahrens ist das weibliche Installationsgewinde größer ausgebildet als das Bolzengewinde, insbesondere übersteigt das weibliche Installationsgewinde die Gewindeabmessung des Gewindebolzens um 2 bis 10 %.

Das Installationsverfahren wird mit dem bereits erwähnten Installationswerkzeug realisiert. Dieses Installationswerkzeug, welches unten in größerem Detail beschrieben ist, weist als wesentliches Element einen weiblichen Gewindeabschnitt auf. In diesem weiblichen Gewindeabschnitt ist der zu installierende Drahtgewindeeinsatz aufnehmbar. Gleichzeitig übernimmt das Werkzeug aber auch das oben bereits angesprochene Aufschrauben oder Aufschieben des Drahtgewindeeinsatzes auf das Bolzengewinde. Zu diesem Zweck muss der weibliche Gewindeabschnitt in seiner Dimension derart ausgebildet sein, dass er nach Aufnahme des zu installierenden Drahtgewindeeinsatzes auch noch auf das Bolzengewinde aufschraubbar ist. Daher ist es bevorzugt, das weibliche Installationsgewinde mit einer Gewindeabmessung vorzusehen, die um 2-10 % größer ist als die Gewindedimension des Gewindebolzens.

Vorliegende Erfindung offenbart des Weiteren ein Deinstallationsverfahren für den erfindungsgemäßen Drahtgewindeeinsatz, der auf einem konisch geformten Gewindebolzen angeordnet und über zwei integral ausgebildete Formschlussmittel mit dem Gewindebolzen lösbar verbunden ist, gemäß Patentanspruch 11. Das Deinstallationsverfahren weist die folgenden Schritte auf: Aufschrauben eines Deinstallationswerkzeugs mit einem weiblichen Aufnahmegewinde auf den Gewindebolzen mit

Drahtgewindeeinsatz, Entriegeln des ersten Formschlussmittels aus einem Eingriff mit dem Gewindebolzen durch Zustellen eines Entriegelungsmittels, Drehen des Deinstallationswerkzeugs in Abschraubrichtung des Drahtgewindeeinsatzes vom Gewindebolzen und Abschrauben des Drahtgewindeeinsatzes vom Bolzengewinde.

Im Rahmen des oben zusammengefassten Deinstallationsverfahrens für den Drahtgewindeeinsatz wird vorzugsweise das Installationsverfahren umgekehrt. Das bedeutet, dass der Drahtgewindeeinsatz nun vom Bolzengewinde geschraubt oder geschoben wird. Um im Rahmen dieses Vorgangs ein formschlüssiges Blockieren der integralen Formschlussmittel zu vermeiden, wird zunächst das zweite Formschlussmittel, vorzugsweise der radial einwärts ragende Rasthaken, mit Hilfe des Entriegelungsmittels aus seiner formschlüssigen Verbindung gelöst. Ein bevorzugtes Entriegelungsmittel besteht beispielsweise aus einem radial zustellbaren Stellglied. Dieses greift an dem Rasthaken an oder alternativ am Endbereich des Drahtgewindeeinsatzes und hebt den Rasthaken radial auswärts aus seiner Verrastung in der Vertiefung am Gewindebolzen. Sobald diese formschlüssige Verbindung gelöst ist, beginnt vorzugsweise ein Abschrauben des Drahtgewindeeinsatzes vom Bolzengewinde. Dieses Abschrauben besteht vorzugsweise auch in einem Ausschieben des Drahtgewindeeinsatzes aus dem Bolzengewinde. Dieses Ausschieben wird gemäß einer Ausführungsform vorliegender Erfindung durch das Entriegelungsmittel realisiert, welches in Ausdrehrichtung gegen den Endbereich des Drahtgewindeeinsatzes angrenzend an den Rasthaken drückt.

Nach einer zudem bevorzugten Ausgestaltung des Deinstallationsverfahrens ist in einer Vertiefung im Gewindebolzen zur Aufnahme des Endzapfens des Drahtgewindeeinsatzes eine Einlaufschräge in Aufschraubrichtung vorgesehen, über die der Endzapfen während des Ausschiebens oder Abschraubens aus der Vertiefung gelöst wird.

Um das Deinstallieren des Drahtgewindeeinsatzes vom Bolzengewinde zu vereinfachen, greift kein separates Stellglied am Endzapfen des Drahtgewindeeinsatzes an, um dieses aus der formschlüssigen Verbindung zu lösen. Stattdessen ist die Aufnahmenut des Endzapfens derart ausgebildet, dass sie ein Lösen der formschlüssigen Verbindung zwischen Gewindebolzen und Endzapfen während des Deinstallationsverfahrens unterstützt. Im speziellen weist die Aufnahmenut die bereits oben beschriebene Einlaufschräge auf. Sobald der Drahtgewindeeinsatz in Abschraubrichtung geschraubt oder gedrückt wird, wird der Endzapfen über die Einlaufschräge aus der Nut bewegt. Entsprechend bildet die Einlaufschräge im Deinstallationsverfahren eine Auslaufschräge oder einen Lösebereich, um die formschlüssige Verbindung zwischen dem integralen Formschlussmittel, hier der Endzapfen, und dem Gewindebolzen zu lösen.

Vorliegende Erfindung offenbart außerdem ein Werkzeug für den erfindungsgemäßen Drahtgewindeeinsatz, um diesen auf einem Gewindebolzen zu installieren oder von diesem zu deinstallieren, gemäß Patentanspruch 14. Das erfindungsgemäße Werkzeug weist die folgenden Merkmale auf: ein weibliches Installationsgewinde mit einem Gewindegang, ein bewegbares Anschlagmittel, mit dem der Gewindegang gezielt blockierbar und freigebbar ist, und ein Entriegelungsmittel, welches in radialer Richtung in das Installationsgewinde bewegbar ist, um ein Formschlussmittel zu lösen.

Gemäß einer bevorzugten Ausgestaltung des Werkzeugs ist das Installationsgewinde im Vergleich zu einem Bolzengewinde des Gewindebolzens 2-10 % größer ausgebildet. Weiterhin bevorzugt sind das Anschlagmittel und das Entriegelungsmittel durch nur ein radial versetzbares Stellglied realisiert, welches an einem radial einwärts ragenden Ende eine Mitnahme- oder Lösekonstruktion aufweist.

Wie oben bereits erläutert worden ist, wird das Installationsverfahren und vorzugsweise auch das Deinstallationsverfahren mit einem Werkzeug durchgeführt, welches ein weibliches Aufnahmegewinde für den Drahtgewindeeinsatz aufweist. Da das vorzugsweise radial bewegbare Anschlagmittel den Gewindegang des weiblichen Aufnahmegewindes gezielt blockieren kann, lässt sich das Anschlagmittel zum Aufschrauben oder Aufschieben des Drahtgewindeeinsatzes auf das Bolzengewinde nutzen. In gleicher Weise ist es möglich, dass dieses Anschlagmittel am Endbereich angrenzend an den Rasthaken angreift, um den Drahtgewindeeinsatz vom Bolzengewinde abzuschrauben bzw. aus diesem auszuschieben. Da das bevorzugte Anschlagmittel in den Gewindegang und aus diesem heraus bewegbar ist, ist es bevorzugt gleichzeitig auch zum Lösen des Rasthakens aus der formschlüssigen Verbindung mit dem Gewindebolzen nutzbar. Während einerseits die formschlüssigen Verbindungen zwischen dem Drahtgewindeeinsatz und dem Gewindebolzen für eine wirkungsvolle Befestigung des Drahtgewindeeinsatzes im Bolzengewinde sorgen, lassen sich diese ohne apparativen Aufwand einfach wieder lösen. Entsprechend ist es erfindungsgemäß bevorzugt, dass das Anschlagmittel und das Entriegelungsmittel für zumindest die eine formschlüssige Verbindung in einer Komponente des erfindungsgemäß bevorzugten Werkzeugs realisiert sind.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Figur 1: eine bevorzugte Ausführungsform eines konisch geformten Drahtgewindeeinsatzes gemäß vorliegender Erfindung, der auf einem konisch geformten Bolzengewinde installiert ist,
- Figur 2: eine bevorzugte Ausführungsform eines nicht erfindungsgemäßen zylindrisch geformten Drahtgewindeeinsatzes, der auf einem zylindrisch geformten Bolzengewinde installiert ist,

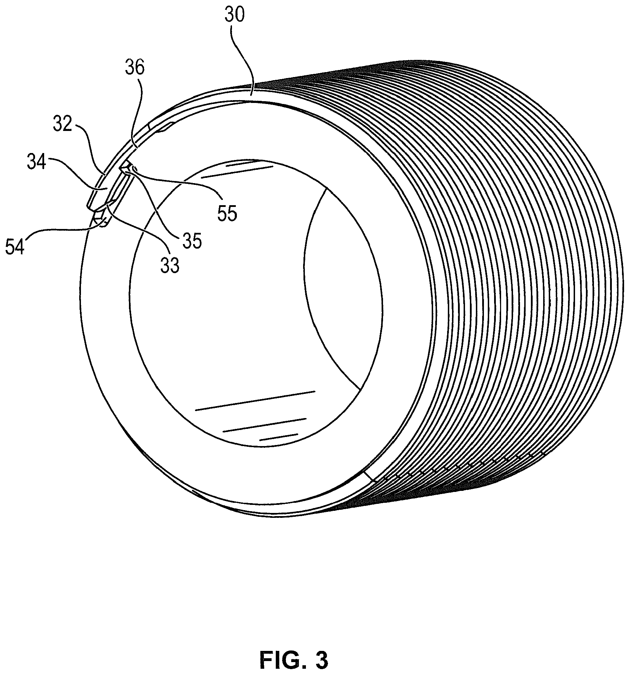

- Figur 3: eine perspektivische Ansicht eines bevorzugtes Befestigungsendes des Drahtgewindeeinsatzes gemäß Figur 1,

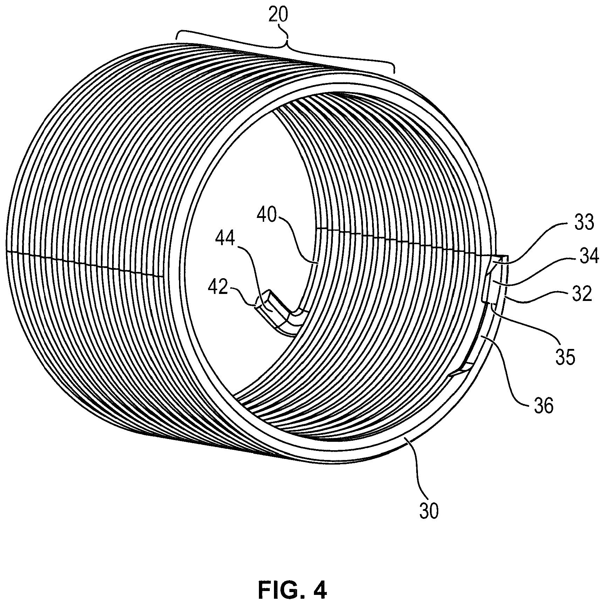

- Figur 4: eine perspektivische Darstellung des Drahtgewindeeinsatzes aus Figur 1,
- Figur 5: eine teilweise Schnittansicht des nicht erfindungsgemäßen zylindrischen Drahtgewindeeinsatzes aus Figur 2,
- Figur 6: eine Draufsicht auf einen bevorzugten Endzapfen des Drahtgewindeeinsatzes gemäß Figur 1,

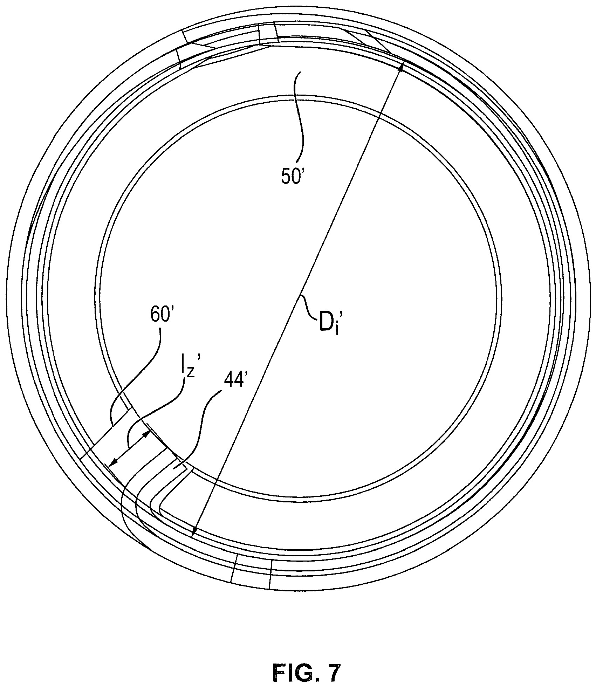

- Figur 7: eine Darstellung einer bevorzugten Ausführungsform eines Endzapfens des nicht erfindungsgemäßen Drahtgewindeeinsatzes gemäß Figur 2,
- Figur 8: eine bevorzugte Ausführungsform einer Aufnahmevertiefung im Bolzenkörper benachbart zum Bolzengewinde,
- Figur 9: eine vergrößerte Darstellung einer bevorzugten Ausgestaltung des Rasthakens, der bevorzugt in Kombination mit dem konischen und dem nicht erfindungsgemäßen zylindrischen Drahtgewindeeinsatzes Anwendung findet,
- Figur 10: eine vergrößerte Darstellung einer bevorzugten Ausgestaltung des Bolzenkörpers mit Vertiefung zur Aufnahme des Rasthakens des Drahtgewindeeinsatzes gemäß Figur 9,
- Figur 11: eine perspektivische Ansicht einer bevorzugten Ausführungsform des Werkzeugs,
- Figur 12: eine weitere perspektivische Ansicht der bevorzugten Ausführungsform des Werkzeugs aus Figur 11,

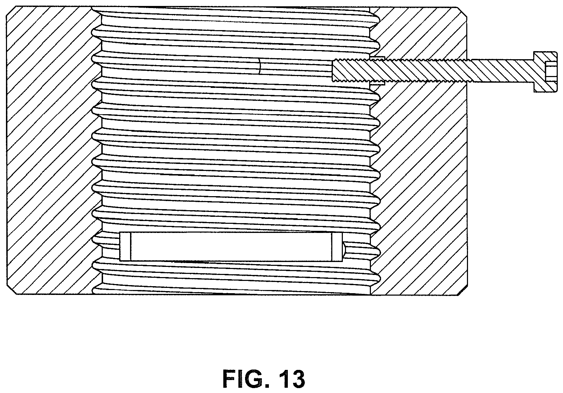

- Figur 13: eine teilweise Schnittansicht des Werkzeugs aus Figur 12,
- Figur 14: eine vergrößerte Darstellung einer bevorzugten Ausführungsform des Entriegelungsmittels des Werkzeugs,

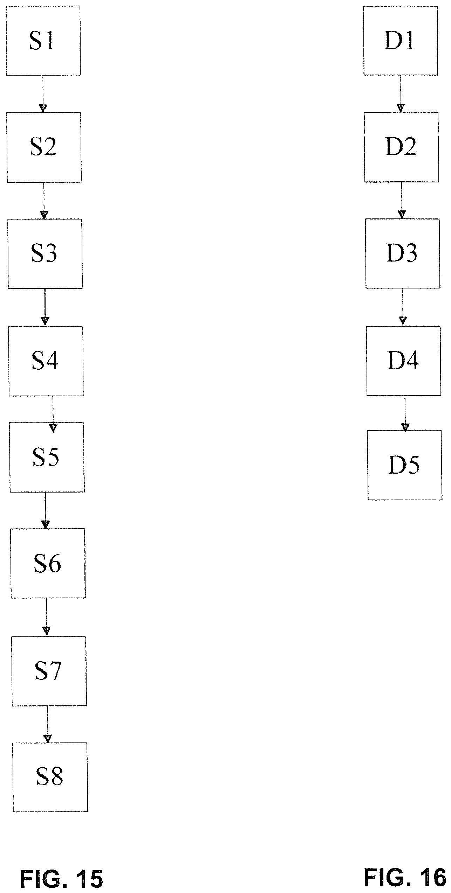

- Figur 15: ein Flussdiagramm einer bevorzugten Ausführungsform des Installationsverfahrens und
- Figur 16: ein Flussdiagramm einer bevorzugten Ausführungsform des Deinstallationsverfahrens.

### 5. Detaillierte Beschreibung der bevorzugten Ausführungsformen

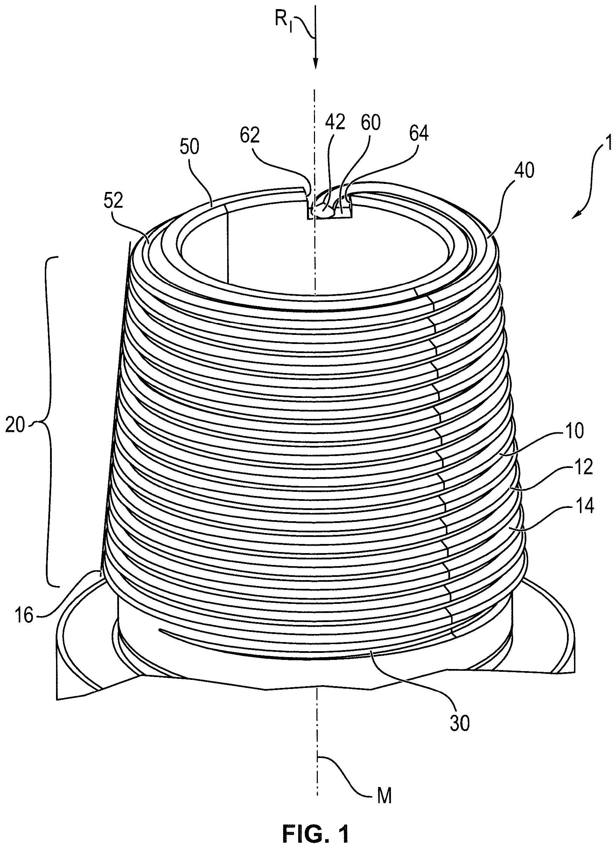

Figur 1 zeigt eine perspektivische Ansicht eines Drahtgewindeeinsatzes 1, der auf einem Bolzen 50 mit Bolzengewinde 52 angeordnet ist. Der Drahtgewindeeinsatz 1 umfasst eine Mehrzahl schraubenförmig gewickelter Windungen 10, 12, 14, die einen Körper 20 des Drahtgewindeeinsatzes 1 bilden. Eine Mittelachse M des Drahtgewindeeinsatzes 1 definiert gleichzeitig eine Installationsrichtung R_{I}, in der der Drahtgewindeeinsatz auf das Bolzengewinde 52 des Bolzens 50 aufgeschraubt wird bzw. auf diesem installiert wird.

In Installationsrichtung R_{I} betrachtet weitet sich der Körper 20 des Drahtgewindeeinsatzes 1 auf. Entsprechend weist der Körper 20 eine konische, insbesondere eine kegelstumpfartige, Form auf. Ein Durchmesser der Windungen 10, 12, 14 nimmt in Installationsrichtung RI zu. Entsprechend ist zwischen der Mittelachse M und einer äußeren Mantelfläche 16 des Körpers 20 ein Konuswinkel α eingeschlossen. Dieser liegt vorzugsweise in einem Bereich von 1 ° ≤ α ≤ 25°, weiter bevorzugt 2° ≤ α ≤ 15° und noch mehr bevorzugt in einem Winkelbereich von 2° ≤ α ≤ 8°.

Vorzugsweise sind der Konuswinkel des Drahtgewindeeinsatzes 1 und der des Gewindebolzens oder der Gewindebohrung aufeinander abgestimmt. Das bedeutet, dass der Konuswinkel des Drahtgewindeeinsatzes 1 dem Konuswinkel des Gewindebolzens oder der Gewindeöffnung entspricht.

Die Windungen 10, 12, 14 weisen im Querschnitt betrachtet an einer radialen Innenseite - also dem Aufnahmegewinde des Gewindebolzens zugewandt - bevorzugt ein Verankerungsprofil auf. Dieses optionale Merkmal ist dazu geeignet, die Befestigung des Drahtgewindeeinsatzes im Aufnahmegewinde des Gewindebolzens oder der Gewindebohrung zu unterstützen. An einer radialen Außenseite ist ein Profil vorgesehen, welches eine Gewindeform bildet, sobald der Drahtgewindeeinsatz 1 im Bolzengewinde 52 installiert worden ist.

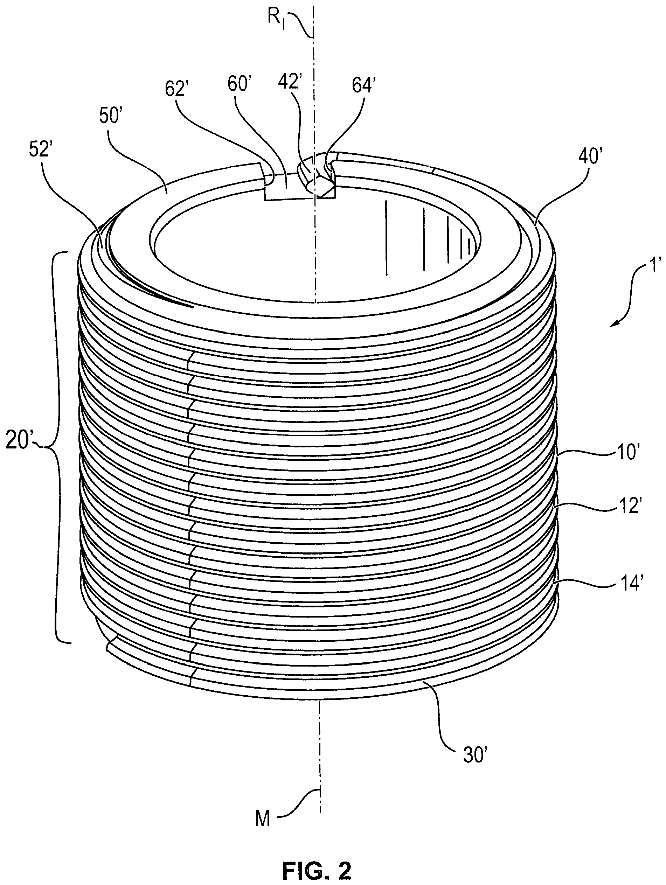

Der installierte nicht erfindungsgemäße Drahtgewindeeinsatz 1' gemäß Figur 2 weist ähnliche konstruktive Merkmale auf wie der Drahtgewindeeinsatz 1 aus Figur 1. Diese sind mit den gleichen Bezugszeichen wie in Figur 1 bezeichnet. Im Unterschied zur Ausführungsform der Figur 1 ist der Körper 20' des Drahtgewindeeinsatzes 1` zylindrisch geformt. Entsprechend weisen die Windungen 10', 12', 14' den gleichen Durchmesser auf. Auch der Bolzen 50' besitzt eine zylindrische Form und das Bolzengewinde 52' wird durch eine zylindrische Mantelfläche eingeschlossen.

Sowohl konische 52 wie auch zylindrisch geformte Bolzengewinde 52' sind allgemein bekannt, sodass im Hinblick auf die Formgestaltung und die Dimensionierung dieser Gewinde auf den Stand der Technik verwiesen wird.

Um konisch geformte und zylindrisch geformte Drahtgewindeeinsätze 1, 1' zunächst reibschlüssig auf dem Bolzengewinde zu befestigen, ist es bevorzugt, diese mit Untermaß bezogen auf das Bolzengewinde 52; 52` herzustellen. Untermaß bedeutet in diesem Zusammenhang, dass der Drahtgewindeeinsatz 1; 1' ein kleineres Gewinde als der Bolzen aufweist. Erfindungsgemäß bevorzugt liegt das Untermaß im Bereich von 1 bis 5 % und weiter bevorzugt im Bereich von 2% bis 4 % bezogen auf das Bolzengewinde.

Die Mehrzahl an schraubenförmig gewickelten Windungen 10, 12, 14; 10', 12', 14' weist eine erste axiale Endwindung 30; 30` und eine zweite axiale Endwindung 40; 40' auf. Als axiale Endwindung 30, 40; 30`, 40` wird bezogen auf den Körper 20; 20' die jeweils an die axiale Stirnseite des Körpers 20; 20' angrenzende letzte Windung der Mehrzahl von schraubenförmig gewickelten Windungen 10, 12, 14; 10', 12', 14' bezeichnet. Jede Endwindung 30, 40; 30', 40' umfasst ein integral ausgebildetes Formschlussmittel 32, 42; 32', 42'. Diese Formschlussmittel 32, 42; 32', 42' werden in analoger Weise in konisch geformten Drahtgewindeeinsätzen 1 wie in zylindrisch geformten Drahtgewindeeinsätzen J ` eingesetzt.

Mit Bezug auf den konisch geformten Drahtgewindeeinsatz 1 weist die erste Endwindung 30 einen größeren Durchmesser als die zweite Endwindung 40 auf. In der ersten Endwindung 30 umfasst das erste integral ausgebildete Formschlussmittel 32 einen Rasthaken 34, der angrenzend an eine Vertiefung 36 an einer radialen Innenseite der ersten Endwindung 30 ausgebildet ist.

Der Rasthaken 34 hat vorzugsweise eine Eindrehschräge 33, die eine Installation des Drahtgewindeeinsatzes 1 im Bolzengewinde 52 unterstützt. Die Eindrehschräge 33 ist an der radialen Innenseite und am freien Ende der ersten Endwindung 30 angeordnet.

Der Rasthaken 34 schnappt im installierten Zustand auf dem Bolzengewinde 52 in eine Rastvertiefung 54 ein. Die Rastvertiefung 54 ist im Bolzenkörper oder im Bolzengewinde 52 angeordnet. Sie stellt eine Anschlagfläche 55 bereit, deren Flächennormale N₅₅ annähernd tangential zum Bolzengewinde 52 sowie in Eindrehrichtung des Drahtgewindeeinsatzes 1 orientiert ist. Aufgrund dieser Orientierung bildet die Anschlagfläche 55 als Anschlagsbereich und Blockadefläche für eine Rastfläche 35 des Rasthakens 32 eine Rückdrehsicherung für den installierten Drahtgewindeeinsatz 1. Zu diesem Zweck ist eine Flächennormale N₃₅ der Rastfläche 35 annähernd antiparallel zur Flächennormalen N₅₅ orientiert.

Während der Installation des Drahtgewindeeinsatzes 1 wird dieser in das Bolzengewinde 52 eingedreht. Sobald das integrale Formschlussmittel 32 aus dem Bolzengewinde 52 über eine Zwischenerhebung 56 in die Rastvertiefung 54 gelaufen ist, verriegelt es dort den Drahtgewindeeinsatz 1 gegen Ausdrehen aus dem Bolzengewinde 52. Aufgrund von Reibung zwischen dem Drahtgewindeeinsatz 1 und einem umgebenden Aufnahmegewinde (nicht gezeigt) könnte ein derartiges Rückdrehen ohne den gleichzeitigen Versuch der Deinstallation auftreten und zu einer Lösung des Drahtgewindeeinsatzes führen.

In der zweiten Endwindung 40 ist in einem zweiten Endabschnitt als integrales Formschlussmittel 42 ein Endzapfen 44 vorgesehen. Der Endzapfen 44 ragt annähernd radial einwärts im Vergleich zum Verlauf der zweiten Endwindung 40. In diesem Zusammenhang ist es nicht erforderlich, dass der Endzapfen 44 genau auf einen Mittelpunkt der zweiten Endwindung 40 weist. Weiterhin bevorzugt besteht der Endzapfen 44 aus einem abgewinkelten Ende der zweiten Endwindung 40. Vorzugsweise hat der Endzapfen eine Mindestlänge, die einen Eingriff des Endzapfens 44 in eine entsprechende Vertiefung 60 im Bolzenkörper 50 oder in ein Bolzengewinde 52 gewährleistet. Da der Endzapfen 44 eine Verdrehsicherung des Drahtgewindeeinsatzes 1 bereitstellt, ist aufgrund seines Widerstands gegen Scherbelastung bereits eine geringe Länge dafür ausreichend. Vorzugsweise ist die Länge des Endzapfens 44, mit dem der Endzapfen 44 über den Innendurchmesser Di des Drahtgewindeeinsatzes 1 hinaus radial einwärts ragt, aus einem Bereich von 0,4 B_{D} ≤ L_{Z} ≤ 3,0 B_{D}. In diesem Zusammenhang bezeichnet B_{D} die radiale Breite des Drahts des Drahtgewindeeinsatzes 1, die bei einem annähernd rautenförmigen Drahtquerschnitt die längere Diagonale im Drahtquerschnitt bezeichnet. Bei einem quadratischen Drahtquerschnitt sind die Diagonalen des Drahtquerschnitts gleich lang.

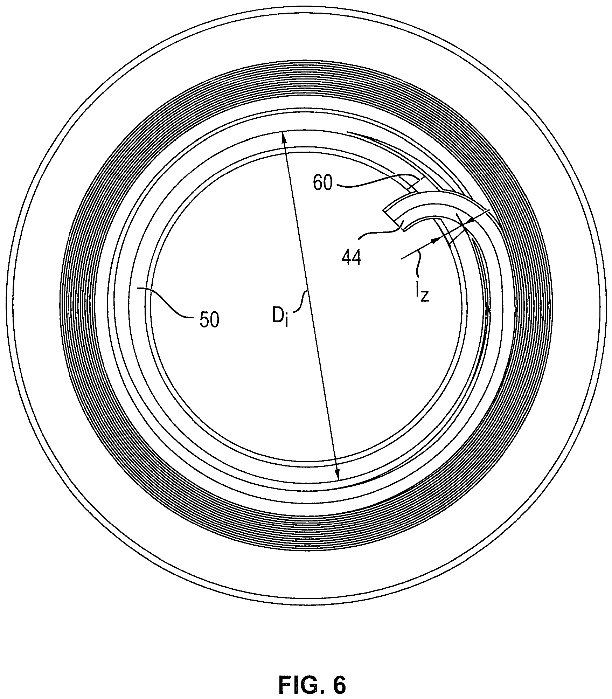

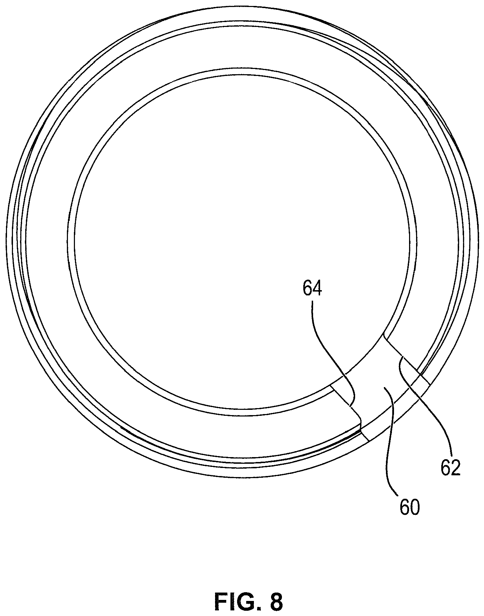

Wie man anhand der Figuren 1, 6 und 8 erkennen kann, ist die radiale Vertiefung 60 im Bolzen 50 als eine in axialer Richtung offene Nut ausgebildet. Die Nut ist entgegen der Installationsrichtung R_{I} offen. Vorzugsweise wird die Nut in Tangentialrichtung durch die beiden Blockadeflächen 62, 64 begrenzt.

Sobald der Endzapfen 44 in der Vertiefung 60 eingeschnappt ist, verhindert die Blockadefläche 64 vorzugsweise ein weiteres Eindrehen des Drahtgewindeeinsatzes 1 in Installationsrichtung. Entsprechend kann der Rasthaken 34 nicht über die Rastvertiefung 54 hinausgeschoben werden. Die weitere Blockadefläche 62 verhindert bevorzugt ein Rückdrehen des Drahtgewindeeinsatzes 1, in dem der Endzapfen 44 dort anschlägt. Aufgrund seiner Anordnung bildet der Endzapfen 44 somit einen rotationshemmenden Hinterschnitt in mindestens eine Drehrichtung, der bevorzugt das weitere Eindrehen des Drahtgewindeeinsatzes 1 und weiter bevorzugt das Ausdrehen des Drahtgewindeeinsatzes 1 blockiert.

Entsprechend sind die rotationshemmenden Hinterschnitte des Endzapfens 42 und des Rasthakens 34 entgegengesetzt zueinander orientiert. Dadurch wird eine Fehlinstallation durch Überdrehen und eine Deinstallation durch Herausdrehen des Drahtgewindeeinsatzes 1 aus dem Bolzengewinde vermieden.

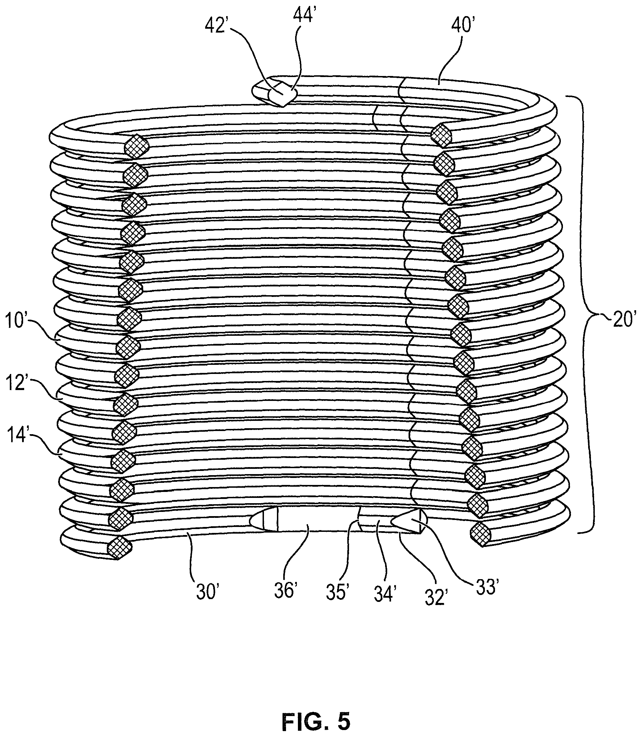

Die oben beschriebene konstruktive Gestaltung und Anordnung der integralen Formschlussmittel 32, 42 ist für einen zylindrisch geformten Drahtgewindeeinsatz 1' gemäß Figur 2 analog anwendbar. Dies ist anhand der teilweisen Schnittansicht in Figur 5 erkennbar. Entsprechend wird auf die analog anwendbaren Erläuterungen zu den oben diskutierten bevorzugten Ausführungsformen des Drahtgewindeeinsatzes mit konischer Form verwiesen.

Generell ist hervorzuheben, dass die Drahtgewindeeinsätze gemäß der bevorzugten Ausführungsformen vorliegender Erfindung und auch gemäß der nicht erfindungsgemäßen Ausführungsformen keinen Einbauzapfen aufweisen, der gemäß dem Stand der Technik diametral angeordnet ist. Derartige Zapfen dienen als Mitnahme-/Installations- und/oder als Verriegelungszapfen. Für einen Drahtgewindeeinsatz 1 eines konischen oder eines zylindrischen Aufnahmegewindes des Gewindebolzens wäre dieser diametrale Zapfen störend, da die Installation des Drahtgewindeeinsatzes in axialer Richtung begrenzt würde. Für einen Drahtgewindeeinsatz eines konischen oder eines zylindrischen weiblichen Aufnahmegewindes (siehe unten) müsste dieser diametrale Zapfen entfernt werden, um innerhalb des weiblichen Gewindes einen Gewindebolzen oder ähnliches installieren zu können. Dieser zusätzliche Aufwand wird vorzugsweise vermieden.

Des Weiteren sind die oben beschriebenen Merkmale der Konstruktionen der Drahtgewindeeinsätze 1; 1' auch auf konisch und nicht erfindungsgemäß zylindrisch geformte Drahtgewindeeinsätze für Mutterngewinde bzw. Gewindeöffnungen übertragbar.

Ein Drahtgewindeeinsatz für ein Mutterngewinde wird bevorzugt mit Übermaß bezogen auf eine Gewindegeometrie der Gewindeöffnung bereitgestellt. Das bedeutet, dass ein Außendurchmesser des Drahtgewindeeinsatzes größer ist als ein Innendurchmesser der Gewindeöffnung. Dies gewährleistet, dass der Drahtgewindeeinsatz aufgrund seiner inhärenten Federeigenschaften in das Aufnahmegewinde gedrückt wird und sich dort über eine Reibschlussverbindung festhält. Erfindungsgemäß bevorzugt liegt das Übermaß im Bereich von 1 bis 5 % und weiter bevorzugt im Bereich von 2% bis 4 % bezogen auf das Mutterngewinde.

Die Funktionalität der integralen Formschlussmittel bleibt auch bei der Nutzung in einem Drahtgewindeeinsatz für ein Mutterngewinde erhalten. Im Unterschied zum Drahtgewindeeinsatz 1; 1' für ein Bolzengewinde 52; 52' sind die beiden integralen Formschlussmittel radial auswärts orientiert, um in den Mutternkörper oder in ein Mutterngewinde oder in eine Bauteilwand der Gewindeöffnung eingreifen zu können.

Erfindungsgemäß bevorzugt wird bei einer Verbindung aus einem Gewindebolzen und einem weiblichen Gewinde mindestens eines der Gewinde durch den oben beschriebenen Drahtgewindeeinsatz verstärkt. Es ist ebenfalls bevorzugt, beide Gewinde, also das Bolzengewinde und das weibliche Gewinde, mit jeweils einem Drahtgewindeeinsatz zu verstärken. Sobald die jeweilige Verstärkung erfolgt ist, wird der Gewindebolzen in das weibliche Gewinde eingeschraubt und dort befestigt.

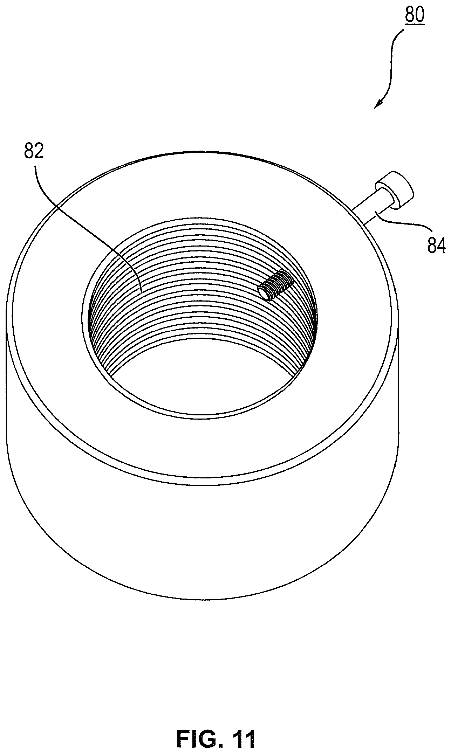

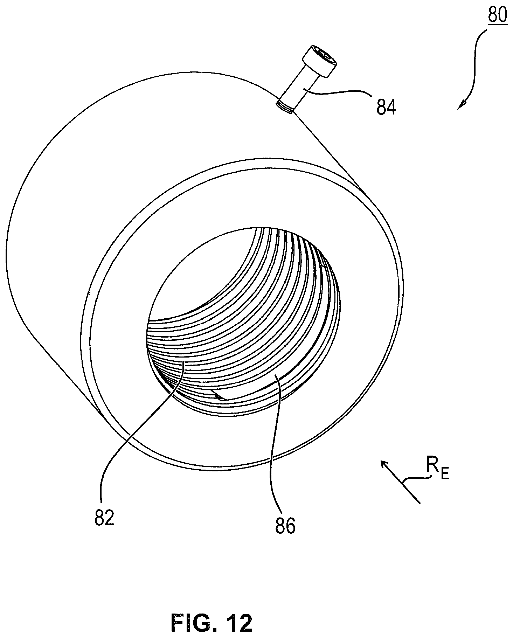

Um den Drahtgewindeeinsatz 1; 1' auf dem Gewindebolzen 50; 50' zu installieren, ist ein Werkzeug 80 vorgesehen. In einer perspektivischen Darstellung in Figuren 11 und 12 sind bevorzugte Eigenschaften des Werkzeugs 80 dargestellt, um das Wirkprinzip und die Funktionalität zu erläutern. Es versteht sich, dass das Werkzeug 80 als manuelles oder als automatisches Werkzeug 80 ausgeführt sein kann, ohne dass diese hier im Detail beschrieben sein müssen.

Das Werkzeug 80 umfasst ein weibliches Aufnahmegewinde 82. Im Aufnahmegewinde 82 wird der Drahtgewindeeinsatz 1; 1' aufgenommen, um diesen dann auf dem Bolzengewinde 52; 52' zu installieren. Je nach äußerer Form des Gewindebolzens 50; 50' und entsprechend des erfindungsgemäßen konischen und des nicht erfindungsgemäßen zylindrischen Drahtgewindeeinsatzes 1; 1' ist das Aufnahmegewinde 82 konisch oder zylindrisch ausgebildet.

Zur Installation wird der Drahtgewindeeinsatz 1; 1' in das Aufnahmegewinde 82 eingeschraubt (S1). Dabei wird der Drahtgewindeeinsatz 1; 1' bevorzugt so lange gedreht, bis ein in den Gewindegang des Aufnahmegewinde 82 ragendes Anschlagmittel 84 den Gewindegang und damit ein weiteres Eindrehen blockiert (S2).

Das Anschlagmittel 84 wird vorzugsweise durch ein in den Gewindegang des Aufnahmegewindes 82 versetzbares Stellglied gebildet. Das radiale Verstellen des Stellglieds wird vorzugsweise mithilfe einer Gewindeverbindung realisiert. In gleicher Weise ist auch ein axiales Verschieben oder motorisches Stellen denkbar.

Der Drahtgewindeeinsatz 1; 1' wird vorzugsweise mit dem zweiten Formschlussmittel 44; 44', also dem Endzapfen, voraus in das Aufnahmegewinde 82 geschraubt. Daher liegt bevorzugt am oder benachbart zum Endzapfen der Drahtgewindeeinsatz 1; 1' am Anschlagmittel 84 an. Die Einschraubrichtung ist mit R_{E} bezeichnet. Während des Einschraubens wirken Reibungskräfte dem Gleiten des Drahtgewindeeinsatzes 1; 1' im Gewindegang entgegen. Dadurch wird der Drahtgewindeeinsatz 1; 1' während des Einschraubens aufgeweitet, was das Einschrauben unterstützt.

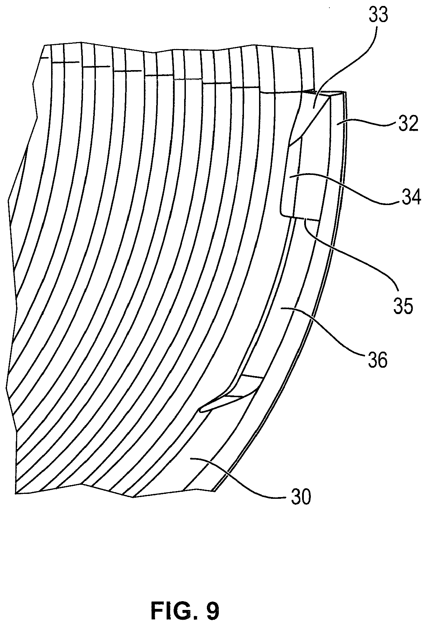

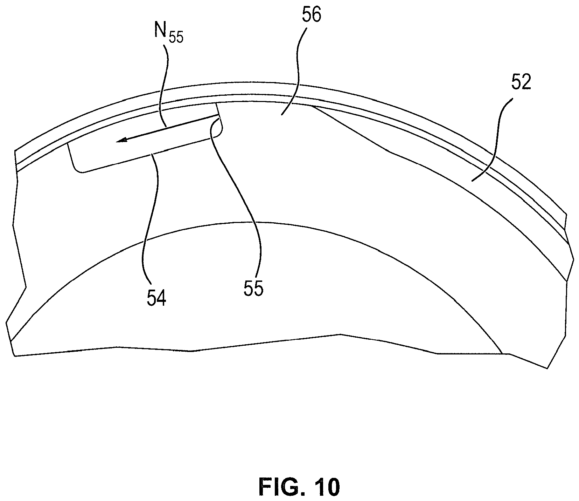

Der Drahtgewindeeinsatz 1; 1' wird vorzugsweise so weit in das Aufnahmegewinde 82 geschraubt, bis das erste Formschlussmittel 34; 34' angrenzend an eine radiale Ausnehmung 86 angeordnet ist. Die Ausnehmung 86 vergrößert den Gewindegang des Aufnahmegewindes 82 radial auswärts. Dadurch ermöglicht die Ausnehmung 86 dem ersten Formschlussmittel 34; 34', hier der endseitige Rasthaken 34; 34' (siehe Figur 9), bei der Installation des Drahtgewindeeinsatzes 1; 1' über die Zwischenerhebung 56; 56' zu gleiten und in der Rastvertiefung 54; 54' einzurasten (siehe Figur 10). Während einer Deinstallation des Drahtgewindeeinsatzes 1; 1' gewährleistet die Ausnehmung 86 ein Bewegen des Rasthakens 34; 34' radial auswärts, um dann über die Zwischenerhebung 56; 56' hinweg geschoben oder gedreht zu werden.

Der Drahtgewindeeinsatz 1; 1' wird soweit auf das Bolzengewinde 52; 52' aufgeschraubt, bis der Rasthaken 34; 34' nach dem Überschreiten der Zwischenerhebung 56; 56' in die Rastvertiefung 54; 54' eingerastet ist (S6).

Zudem gleitet der bevorzugte Endzapfen 44; 44' in die Vertiefung 60; 60' im Gewindebolzen 50; 50', um dort einzurasten (S7). Vorzugsweise weist die Vertiefung 60; 60' anstelle der Seitenwand 62 (siehe Figur 1) eine Einführschräge (nicht gezeigt) auf. Diese erleichtert das Gleiten des Endzapfens 44; 40' in die Vertiefung 60; 60'.

Sobald der Endzapfen 44; 44' und der Rasthaken 34; 34' eingerastet sind, ist der Drahtgewindeeinsatz 1; 1' verlässlich befestigt. Das Werkzeug 80 wird dann von dem installierten Drahtgewindeeinsatz 1; 1' abgeschraubt.

Erfindungsgemäß bevorzugt ist das Aufnahmegewinde 82 des Werkzeugs 80 2 bis 10 % größer dimensioniert als das Bolzengewinde 52; 52. Auf diese Weise ist gewährleistet, dass der Drahtgewindeeinsatz 1; 1' verlässlich im Werkzeug 80 aufnehmbar und auf dem Gewindebolzen 50; 50' installierbar ist.

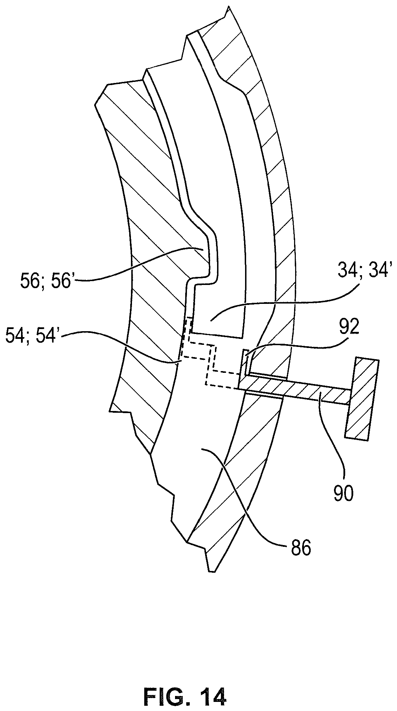

Zur bevorzugten Deinstallation des Drahtgewindeeinsatzes 1; 1' vom Bolzengewinde 52; 52' weist das Werkzeug 80 vorzugsweise ein Entriegelungsmittel für das endseitige Formschlussmittel 34; 34' auf. Das Entriegelungsmittel umfasst bevorzugt ein radial versetzbares Stellglied 90. Das Stellglied 90 ist mit einer Mitnahme- oder Lösekonstruktion 92 ausgestattet, die in die Ausnehmung 86 ragt. Zudem ist das Stellglied 90 mit der Lösekonstruktion 92 derart bewegbar, dass das Stellglied 90 den Rasthaken 34; 34' aus der Vertiefung 36; 36' lösen und in die Ausnehmung 86 bewegen kann (D2). Diese Bewegung und Funktionalität sind durch die gestrichelten Linien in Figur 14 veranschaulicht. Bevor dieses Entriegeln stattfinden kann, wird das Werkzeug 80 auf den Gewindebolzen 50; 50' mit Drahtgewindeeinsatz 1; 1' geschraubt (D1).

Nachdem im Schritt D2 der Rasthaken 34; 34' entriegelt worden ist, wird das Werkzeug 80 gegen die Gewinderichtung gedreht (D4). Dabei bewegt sich bevorzugte das Stellglied 90 gegen das zum Rasthaken 34; 34' benachbarte Ende (D3) und beginnt den Drahtgewindeeinsatz 1; 1' aus dem Bolzengewinde 52; 52' auszuschieben (D5) bzw. von diesem abzuschrauben (D6).

Das bevorzugte Ausschieben bewirkt ein Aufweiten des Drahtgewindeeinsatzes 1; 1' gegen die Reibungskräfte zum Bolzengewinde 52; 52. Dies unterstützt ebenfalls die Deinstallation des Drahtgewindeeinsatzes 1; 1'. Um die Deinstallation zu vereinfachen, gleitet der Endzapfen 44; 44' bevorzugt über die Einlaufschräge der Vertiefung 60 aus dem formschlüssigen Eingriff. Die Einlaufschräge ist vorzugsweise anstelle der Begrenzungswand 62 angeordnet, wie es oben bereits beschrieben worden ist.

### Bezugszeichenliste

- 1,1': Drahtgewindeeinsatz
- 10, 12, 14, 10`, 12`, 14`: Windungen
- 20, 20`: Körper
- 30, 30': erste Endwindung
- 32, 32`: Formschlussmittel
- 33, 33`: Eindrehschräge
- 34, 34': Rasthaken
- 35, 35': Rastfläche
- 36, 36`,: Vertiefung
- 40, 40`: zweite Endwindung
- 42, 42`: Formschlussmittel
- 44, 44 `: Endzapfen
- 50, 50': Bolzen
- 52, 52`: Bolzengewinde
- 54, 54': Rastvertiefung
- 55, 55`: Anschlagflächen
- 56, 56': Zwischenerhebung
- 60, 60': Vertiefung im Bolzen
- 62, 64, 62', 64': Blockadeflächen
- 80: Werkzeug
- 82: Aufnahmegewinde
- 84: Anschlagmittel
- 86: Ausnehmung
- 90: Stellglied
- 92: Entriegelungsmittel
- M: Mittelachse
- R_{I}: Installationsrichtung
- R_{E}: Einschraubrichtung
- N₅₅: Flächennormale der Anschlagfläche 55
- D_{I}: Innendurchmesser
- B_{D}: radiale Breite des Drahts des Gewindeeinsatzes

## Patentansprüche

1. Ein konisch geformter Drahtgewindeeinsatz (1) bestehend aus einem Körper (20) mit einer Mehrzahl von schraubenförmig gewickelten Windungen (10, 12, 14), in dem die Mehrzahl an schraubenförmig gewickelten Windungen (10, 12, 14) eine erste Endwindung (30) und eine zweite Endwindung (40) umfasst, die den Körper (20) an einander gegenüberliegenden axialen Enden begrenzen, und
die erste Endwindung (30) weist in einem ersten Endabschnitt ein erstes integrales Formschlussmittel (32) auf und die zweite Endwindung (40) weist in einem zweiten Endabschnitt ein zweites integrales Formschlussmittel (42) auf, sodass in einem installierten Zustand des Drahtgewindeeinsatzes (1) über das erste (32) und das zweite integrale Formschlussmittel (42) jeweils eine formschlüssige drehungshemmende Verbindung mit einer angrenzenden Bauteilstruktur herstellbar ist, wobei das erste (32) und das zweite integrale Formschlussmittel (42) des Drahtgewindeeinsatzes (1) eines Bolzengewindes (52) radial einwärts bezogen auf die Windungen (10, 12, 14) des Drahtgewindeeinsatzes (1) orientiert sind und das erste (32) und das zweite integrale Formschlussmittel (42) des Drahtgewindeeinsatzes (1) eines Mutterngewindes radial auswärts bezogen auf die Windungen (10, 12, 14) des Drahtgewindeeinsatzes (1) orientiert sind, **dadurch gekennzeichnet, dass**
das erste Formschlussmittel (32) einen Rasthaken (34) angrenzend an eine Vertiefung (36) im ersten Endabschnitt (30) und das zweite Formschlussmittel (42) im zweiten Endabschnitt (40) einen Endzapfen (44) umfasst.

2. Der konisch geformte Drahtgewindeeinsatz (1) gemäß Patentanspruch 1, in dem das erste (32) und das zweite Formschlussmittel (42) entsprechend einen ersten und einen zweiten rotationshemmenden Hinterschnitt bereitstellen, die entgegengesetzt zueinander orientiert sind.

3. Der konisch geformte Drahtgewindeeinsatz (1) gemäß Patentanspruch 1, in dem die erste Endwindung (30) einen größeren Durchmesser als die zweite Endwindung (40) aufweist und der Rasthaken (34) im ersten Endabschnitt und der Endzapfen (44) im zweiten Endabschnitt angeordnet sind.

4. Gewindebolzen (50) mit einem konischen Außengewinde, auf dem ein konisch geformter Drahtgewindeeinsatz (1) gemäß einem der Patentansprüche 1 bis 3 angeordnet ist.

5. Gewindeöffnung mit einem konischen Innengewinde, in dem ein konisch geformter Drahtgewindeeinsatz (1) gemäß einem der Patentansprüche 1 bis 3 angeordnet ist.

6. Verbindung aus einem Bolzen (50) mit einem äußeren Bolzengewinde (52) und einer Gewindeöffnung mit einem inneren Mutterngewinde, wobei das Bolzengewinde (52) einen konisch geformten Drahtgewindeeinsatz (1) gemäß einem der Patentansprüche 1 bis 3 und/oder das Mutterngewinde einen konisch geformten Drahtgewindeeinsatz (1) gemäß einem der Patentansprüche 1 bis 3 aufweist.

7. Installationsverfahren für einen konisch geformten Drahtgewindeeinsatz (1) gemäß einem der vorhergehenden Patentansprüche 1-3 auf einem Bolzengewinde (52), **gekennzeichnet durch** die folgenden Schritte:
a. Aufnehmen des Drahtgewindeeinsatzes (1) in einem Installationswerkzeug (80) mit einem weiblichen Installationsgewinde (82), das einen Gewindegang umfasst (S1),
b. Blockieren des Gewindegangs mit einem radial versetzbaren Anschlagmittel (84) (S2),
c. Drehen des Installationswerkzeugs (80) in einer Gangrichtung des Drahtgewindeeinsatzes (1) (S3) derart, dass das Anschlagmittel (84) endseitig entgegen einer Installationsrichtung (R_{I}) am Drahtgewindeeinsatz (1) angreift, wobei das Installationswerkzeug (80) so lange gedreht wird (S5), bis die beiden integralen Formschlussmittel (32, 42) am Bolzen (50) verriegelt sind (S6, S7), und
d. Zurückdrehen des Installationswerkzeugs (80), um es vom Drahtgewindeeinsatz zu entfernen (S8).

8. Installationsverfahren gemäß Patentanspruch 7, mit dem weiteren Schritt:
endseitiges Schieben des Drahtgewindeeinsatzes (1) mit dem Anschlagmittel (84), sodass sich der Drahtgewindeeinsatz (1) radial aufweitet (S4).

9. Installationsverfahren gemäß Patentanspruch 7 oder 8, mit dem weiteren Schritt:
Verrasten des zweiten Formschlussmittels (42) in einer Vertiefung (54) des Gewindebolzens (50) (S6) und
Verrasten des ersten Formschlussmittels (32) in einer Aufnahmenut, die vorzugsweise eine Einlaufschräge aufweist (S7).

10. Installationsverfahren gemäß einem der Patentansprüche 7 bis 9, wobei das weibliche Installationsgewinde (82) eine Gewindeabmessung des Gewindebolzens (50) um 2-10 % übersteigt.

11. Deinstallationsverfahren für einen konisch geformten Drahtgewindeeinsatz (1) gemäß einem der Patentansprüche 1-3, der auf einem konisch geformten Gewindebolzen (50) angeordnet ist und über zwei integral ausgebildete Formschlussmittel (32, 42) mit dem Gewindebolzen (50) lösbar verbunden ist, und das Deinstallationsverfahren ist **gekennzeichnet durch** die folgenden Schritte:
a. Aufschrauben eines Deinstallationswerkzeugs (80) mit einem weiblichen Aufnahmegewinde (82) auf den Gewindebolzen (50) mit Drahtgewindeeinsatz (1) (D1),
b. Entriegeln des ersten Formschlussmittels (32) aus einem Eingriff mit dem Gewindebolzen (50) durch Zustellen eines Entriegelungsmittels (92) (D2),
c. Drehen des Deinstallationswerkzeugs (80) in Abschraubrichtung des Drahtgewindeeinsatzes (1) (D4) und Abschrauben des Drahtgewindeeinsatzes (1) vom Bolzengewinde (52) (D5).

12. Deinstallationsverfahren gemäß Patentanspruch 11, mit dem weiteren Schritt:
Bewegen des Entriegelungsmittels (92) oder eines Anschlagmittels (84) gegen ein zum ersten Formschlussmittel (32) benachbartes Ende des Drahtgewindeeinsatzes (1) (D3) und
Ausschieben des Drahtgewindeeinsatzes (1) aus dem Bolzengewinde (52) (D5).

13. Deinstallationsverfahren gemäß Patentanspruch 12, in dem eine Vertiefung (60) im Gewindebolzen (50) zur Aufnahme des Endzapfens (44) des Drahtgewindeeinsatzes (1) eine Einlaufschräge in Aufschraubrichtung aufweist, über die der Endzapfen (44) während des Ausschieben aus der Vertiefung (60) gelöst wird.

14. Werkzeug (80) für einen konisch geformten Drahtgewindeeinsatz (1) gemäß einem der vorhergehenden Patentansprüche 1 bis 3, um diesen auf einem Gewindebolzen (50) zu installieren oder von diesem zu deinstallieren, **dadurch gekennzeichnet, dass** es die folgenden Merkmale aufweist:
a. ein weibliches Installationsgewinde (82) mit einem Gewindegang,
b. ein bewegbares Anschlagmittel (84), mit dem der Gewindegang gezielt blockierbar und freigebbar ist, und
c. ein Entriegelungsmittel (92), welches in radialer Richtung in das Installationsgewinde (82) bewegbar ist, um ein Formschlussmittel (32, 42) zu lösen.

15. Werkzeug (80) gemäß Patentanspruch 14, in dem das Installationsgewinde (82) im Vergleich zu einem Bolzengewinde (52) des Gewindebolzens (50) 2-10 % größer ist.

16. Werkzeug (80) gemäß Patentanspruch 14 oder 15, in dem das Anschlagmittel (84) und das Entriegelungsmittel (92) durch nur ein radial versetzbares Stellglied (90) realisiert sind, welches an einem radial einwärts ragenden Ende eine Mitnahme- oder Lösekonstruktion aufweist.

## Claims

1. A conically formed wire thread insert (1) comprising a body (20) having a plurality of helically wound windings (10, 12, 14), in which the plurality of helically wound windings (10, 12, 14) comprises a first end winding (30) and a second end winding (40) delimiting the body (20) at opposite axial ends, and the first end winding (30) has a first integral form fitting means (32) in a first end section and the second end winding (40) has a second integral form fitting means (42) in a second end section, so that, in an installed state of the wire thread insert (1), a form-fit rotation-inhibiting connection with an adjacent component structure can be produced via the first (32) and the second integral form fitting means (42) respectively, wherein the first (32) and the second integral form fitting means (42) of the wire thread insert (1) of a bolt thread (52) are oriented radially inwards with respect to the windings (10, 12, 14) of the wire thread insert (1) and the first (32) and the second integral form fitting means (42) of the wire thread insert (1) of a nut thread are oriented radially outwards with respect to the windings (10, 12, 14) of the wire thread insert (1), **characterized in that** the first form fitting means (32) comprises a latching hook (34) adjacent to a recess (36) in the first end section (30) and the second form fitting means (42) comprises an end tang (44) in the second end section (40).

2. The conically formed wire thread insert (1) according to claim 1, in which the first (32) and the second form fitting means (42) provide a corresponding first and a second rotation-inhibiting undercut, which are oriented opposite to each other.

3. The conically formed wire thread insert (1) according to claim 1 in which the first end winding (30) has a larger diameter than the second end winding (40) and the latching hook (34) is arranged in the first end section and the end tang (44) is arranged in the second end section.

4. A thread bolt (50) with a conical outer thread, on which a conically formed wire thread insert (1) according to one of the claims 1 to 3 is arranged.

5. A thread opening with a conical inner thread, in which a conically formed wire thread insert (1) according to one of the claims 1 to 3 is arranged.

6. A connection of a bolt (50) with an outer bolt thread (52) and a thread opening with an inner nut thread, wherein the bolt thread (52) comprises a conically formed wire thread insert (1) according to one of the claims 1 to 3 and/or the nut thread comprises a conically formed wire thread insert (1) according to one of the claims 1 to 3.

7. An installation method for a conically formed wire thread insert (1) according to any one of the preceding claims 1 to 3 on a bolt thread (52), **characterized by** the following steps:
a. receiving the wire thread insert (1) in an installation tool (80) having a female installation thread (82) comprising a thread turn (S1),
b. blocking the thread turn with a radially displaceable stop means (84) (S2),
c. rotating the installation tool (80) in a turn direction of the wire thread insert (1) (S3) in such a manner that the stop means (84) engages the wire thread insert (1) at the end side contrary to an installation direction (R₁), wherein the installation tool (80) is rotated (S5) until the two integral form fitting means (32, 42) are locked at the bolt (50) (S6, S7), and
d. rotating back the installation tool (80) in order to remove it from the wire thread insert (S8).

8. The installation method according to claim 7, with the further step:
pushing the wire thread insert (1) with the stop means (84) at the end side so that the wire thread insert (1) expands radially (S4).

9. The installation method according to claim 7 or 8, with the further step:
latching the second form fitting means (42) in a recess (54) of the thread bolt (50) (S6) and
latching the first form fitting means (42) in a receiving groove, which preferably comprises a lead-in chamfer (S7).

10. The installation method according to any one of claims 7 to 9, wherein the female installation thread (82) exceeds a thread dimension of the thread bolt (50) by 2-10%.

11. Deinstallation method for a conically formed wire thread insert (1) according to one of the claims 1 to 3, which is arranged on a conically formed thread bolt (50) and is detachably connected to the thread bolt (50) via two integrally formed form fitting means (32, 42), and the deinstallation method is **characterized by** the following steps:
a. screwing a deinstallation tool (80) with a female receiving thread (82) onto the thread bolt (50) with wire thread insert (1) (D1),
b. unlocking the first form fitting means (32) from an engagement with the thread bolt (50) by delivering an unlocking means (92) (D2),
c. rotating the deinstallation tool (80) in the unscrewing direction of the wire thread insert (1) (D4) and unscrewing the wire thread insert (1) from the bolt thread (52) (D5).

12. The deinstallation method according to claim 11, with the further step:
moving the unlocking means (92) or a stop means (84) against an end of the wire thread insert (1) adjacent to the first form fitting means (32) (D3), and
pushing the wire thread insert (1) out of the bolt thread (52) (D5).

13. The deinstallation method according to claim 12, in which a recess (60) in the thread bolt (50) for receiving the end tang (44) of the wire thread insert (1) has a lead-in chamfer in the screwing-on direction, via which the end tang (44) is released from the recess (60) during the pushing-out.

14. A tool (80) for a conically formed wire thread insert (1) according to one of the preceding claims 1 to 3 in order to install the latter on or removing it from a thread bolt (50), **characterized in that** it comprises the following features:
a. a female installation thread (82) with a thread turn,
b. a movable stop means (84) with which the thread turn is selectively blockable and releasable, and
c. an unlocking means (92) which is movable in a radial direction into the installation thread (82) to release a form fitting means (32, 42).

15. The tool (80) according to claim 14 in which the installation thread (82) is 2-10 % larger than a bolt thread (52) of the thread bolt (50).

16. The tool (80) according to claim 14 or 15, in which the stop means (84) and the unlocking means (92) are realized by only one radially displaceable actuator (90), which comprises a driving or releasing construction at a radially inwardly projecting end.

## Revendications

1. Insert fileté en fil métallique (1) formé de manière conique, constitué d'un corps (20) comprenant une pluralité de spires enroulées de manière hélicoïdale (10, 12, 14), dans lequel la pluralité de spires enroulées de manière hélicoïdale (10, 12, 14) comporte une première spire terminale (30) et une deuxième spire terminale (40), lesquelles délimitent le corps (20) à des extrémités axiales opposées l'une à l'autre, et la première spire terminale (30) présente un premier moyen à complémentarité de forme intégral (32) dans une première section terminale et la deuxième spire terminale (40) présente un deuxième moyen à complémentarité de forme intégral (42) dans une deuxième section terminale, de sorte que dans un état installé de l'insert fileté en fil métallique (1), le premier (32) et le deuxième moyen à complémentarité de forme intégral (42) permettent de réaliser respectivement une liaison anti-rotation à complémentarité de forme avec une structure de composant adjacente, dans lequel le premier (32) et le deuxième moyen à complémentarité de forme intégral (42) de l'insert fileté en fil métallique (1) d'un filetage de boulon (52) sont orientés radialement vers l'intérieur par rapport aux spires (10, 12, 14) de l'insert fileté en fil métallique (1) et le premier (32) et le deuxième moyen à complémentarité de forme intégral (42) de l'insert fileté en fil métallique (1) d'un filetage d'écrou sont orientés radialement vers l'extérieur par rapport aux spires (10, 12, 14) de l'insert fileté en fil métallique (1), **caractérisé en ce que** le premier moyen à complémentarité de forme intégral (32) comporte un crochet d'encliquetage (34) adjacent à une cavité (36) dans la première section terminale (30) et le deuxième moyen à complémentarité de forme intégral (42) comporte un ergot terminal (44) dans la deuxième section terminale (40).

2. Insert fileté en fil métallique (1) formé de manière conique selon la revendication 1, dans lequel le premier (32) et le deuxième moyen à complémentarité de forme intégral (42) fournissent de manière correspondante une première et une deuxième contre-dépouille anti-rotation, lesquelles sont orientées de façon opposée l'une par rapport à l'autre.

3. Insert fileté en fil métallique (1) formé de manière conique selon la revendication 1, dans lequel la première spire terminale (30) présente un plus grand diamètre que la deuxième spire terminale (40) et le crochet d'encliquetage (34) est disposé dans la première section terminale et l'ergot terminal (44) dans la deuxième section terminale.

4. Boulon fileté (50) doté d'un filetage extérieur conique, sur lequel est disposé un insert fileté en fil métallique (1) formé de manière conique selon l'une des revendications 1 à 3.

5. Ouverture filetée dotée d'un filetage intérieur conique, dans lequel est disposé un insert fileté en fil métallique (1) formé de manière conique selon l'une des revendications 1 à 3.

6. Liaison composée d'un boulon (50) doté d'un filetage de boulon extérieur (52) et d'une ouverture filetée dotée d'un filetage d'écrou intérieur, dans laquelle le filetage de boulon (52) présente un insert fileté en fil métallique (1) formé de manière conique selon l'une des revendications 1 à 3 et/ou le filetage d'écrou présente un insert fileté en fil métallique (1) formé de manière conique selon l'une des revendications 1 à 3.

7. Procédé d'installation d'un insert fileté en fil métallique (1) formé de manière conique selon l'une des revendications précédentes 1 à 3 sur un filetage de boulon (52), **caractérisé par** les étapes suivantes :
a. réception de l'insert fileté en fil métallique (1) dans un outil d'installation (80) doté d'un filetage d'installation femelle (82), lequel comporte un pas de filetage (S1),
b. blocage du pas de filetage à l'aide d'un moyen de butée (84) déplaçable radialement (S2),
c. rotation de l'outil d'installation (80) dans une direction de pas de l'insert fileté en fil métallique (1) (S3), de telle façon que le moyen de butée (84) vient en prise côté extrémité sur l'insert fileté en fil métallique (1) dans le sens opposé à une direction d'installation (Ri), dans lequel l'outil d'installation (80) est tourné (S5) jusqu'à ce que les deux moyens à complémentarité de forme intégraux (32, 34) soient verrouillés (S6, S7) sur le boulon (50), et
d. rotation arrière de l'outil d'installation (80), afin de l'éloigner de l'insert fileté en fil métallique (S8).

8. Procédé d'installation selon la revendication 7, comprenant l'étape supplémentaire suivante :
poussée de l'insert fileté en fil métallique (1) côté extrémité avec le moyen de butée (84), de sorte que l'insert fileté en fil métallique (1) s'élargit radialement (S4).

9. Procédé d'installation selon la revendication 7 ou 8, comprenant l'étape supplémentaire suivante :
encliquetage du deuxième moyen à complémentarité de forme intégral (42) dans une cavité (54) du boulon fileté (50) (S6) et
encliquetage du premier moyen à complémentarité de forme intégral (32) dans une rainure de réception présentant de préférence un chanfrein d'entrée (S7).

10. Procédé d'installation selon l'une des revendications 7 à 9, dans lequel le filetage d'installation femelle (82) dépasse de 2 à 10% une dimension de filetage du boulon fileté (50).

11. Procédé de désinstallation pour un insert fileté en fil métallique (1) formé de manière conique selon l'une des revendications 1 à 3, lequel est disposé sur un boulon fileté (50) formé de manière conique et lequel est relié de façon détachable au boulon fileté (50) par deux moyens à complémentarité de forme (32, 34) formés intégralement, et le procédé de désinstallation est **caractérisé par** les étapes suivantes :
a. vissage d'un outil de désinstallation (80) doté d'un filetage de réception femelle (82) sur le boulon fileté (50) doté de l'insert fileté en fil métallique (1) (D1),
b. déverrouillage du premier moyen à complémentarité de forme intégral (32) hors d'une prise avec le boulon fileté (50) à l'aide d'un moyen de déverrouillage (92) (D2),
c. rotation de l'outil de désinstallation (80) dans une direction de dévissage de l'insert fileté en fil métallique (1) (D4) et dévissage de l'insert fileté en fil métallique (1) par rapport au filetage de boulon (52) (D5).

12. Procédé de désinstallation selon la revendication 11, comprenant l'étape supplémentaire suivante :
déplacement du moyen de déverrouillage (92) ou d'un moyen de butée (84) vers une extrémité de l'insert fileté en fil métallique (1) adjacente au premier moyen à complémentarité de forme intégral (32) (D3) et
glissement de l'insert fileté en fil métallique (1) hors du filetage de boulon (52) (D5).

13. Procédé de désinstallation selon la revendication 12, dans lequel une cavité (60) dans le boulon fileté (50) permettant de recevoir l'ergot terminal (44) de l'insert fileté en fil métallique (1) présente un chanfrein d'entrée dans la direction de dévissage, par le biais duquel l'ergot terminal (44) est détaché pendant le glissement hors de la cavité (60).

14. Outil (80) destiné à un insert fileté en fil métallique (1) formé de manière conique selon l'une des revendications précédentes 1 à 3, permettant d'installer celui-ci sur un boulon fileté (50) ou de le désinstaller de ce dernier, **caractérisé en ce qu'**il présente les éléments suivants :
a. un filetage d'installation femelle (82) doté d'un pas de filetage,
b. un moyen de butée (84) déplaçable, permettant de bloquer et de libérer le pas de filetage de manière ciblée, et
c. un moyen de déverrouillage (92) déplaçable dans une direction radiale dans le filetage d'installation (82), afin de détacher un moyen à complémentarité de forme (32, 42).

15. Outil (80) selon la revendication 14, dans lequel le filetage d'installation (82) est plus grand de 2 à 10% par rapport à un filetage de boulon (52) du boulon fileté (50).

16. Outil (80) selon la revendication 14 ou 15, dans lequel le moyen de butée (84) et le moyen de déverrouillage (92) sont réalisés par un seul organe de positionnement déplaçable radialement (90), lequel présente une structure d'entraînement ou de détachement à une extrémité faisant saillie radialement vers l'intérieur.
